# EUROPEAN PATENT SPECIFICATION

(11) **EP 3 230 217 B1**
(45) Date of publication and mention of the grant of the patent: **02.06.2021**
(21) Application number: 15816411.1
(22) Date of filing: 11.12.2015
(51) Int. Cl.: C03B 3/02, C03B 5/12, C03B 5/235, F27B 1/20, F27B 15/00, F27B 15/10, F27D 7/06, F23C 1/04, F23C 3/00, F23C 6/04, F23L 7/00

(54) **PROCESS AND APPARATUS FOR MAKING A MINERAL MELT**
VERFAHREN UND VORRICHTUNG ZUR HERSTELLUNG EINES MINERALSALZES
PROCÉDÉ ET APPAREIL POUR LA RÉALISATION D'UN SEL MINÉRAL

(30) Priority: 12.12.2014 EP 14197794
(43) Date of publication of application: 18.10.2017
(73) Proprietor: Rockwool International A/S, 2640 Hedehusene (DK)
(72) Inventor: HANSEN, Lars Elmekilde, DK-4000 Roskilde (DK)
(74) Representative: Gill Jennings & Every LLP
(86) International application number: PCT/EP2015/079493
(87) International publication number: WO 2016/092100

(56) References cited:
- WO-A1-2008/086990
- WO-A1-2008/086991
- WO-A1-2014/057126
- US-A- 3 350 213

## Description

### Background to the Invention

This invention relates to the production of a mineral melt by burning combustible material in the presence of inorganic particulate material and thereby forming a melt. The melt can then be fiberised to form mineral fibres or used in other industrial processes.

One known system for the production of a mineral melt is disclosed in our earlier publication WO 2008/086991. WO2008/086990 shows a similar system. The system of WO2008/086991 involves supplying fuel and combustion gas and combusting the fuel in the presence of suspended particulate mineral material in a circulating combustion chamber, i.e., a combustion chamber in which the suspended particulate materials and air circulate in a system which is or approaches a cyclone circulation system. This is commonly referred to as a cyclone furnace.

The fuel, the combustion gas, and the particulate mineral material, are introduced through the top or close to the top of the combustion chamber. Within the combustion chamber, combustion of the fuel occurs and the particulate material is converted to melt. The melt and particulate material that is not yet melted is thrown onto the walls of the chamber by the circulating gases and will flow down the chamber.

In this system the circulating combustion chamber comprises an upper zone, a lower zone and a base zone, and the method comprises providing a circulating combustion chamber which comprises a top section, a bottom section and a base section, injecting primary fuel, particulate mineral material and primary combustion gas into the top section of the circulating combustion chamber and combusting the primary fuel thereby melting the particulate material to form a mineral melt and generating exhaust gases, separating the mineral melt from the exhaust gases wherein the exhaust gases pass through an outlet in the circulating combustion chamber and the mineral melt collects in the base section of the circulating combustion chamber, injecting secondary fuel and secondary combustion gas into the bottom section of the circulating combustion chamber to form a flame in the bottom section which heats the melt, and flowing a stream of the collected melt through an outlet in the base section to a centrifugal fiberising apparatus and forming fibres.

This publication also describes an apparatus for use in this method, comprising a circulating combustion chamber comprising a substantially cylindrical top section, a bottom section and a base section wherein the circulating combustion chamber comprises inlets in the top section for primary fuel, particulate mineral material and primary combustion gas, inlets in the bottom section for secondary fuel and secondary combustion gas, an outlet for exhaust gases, an outlet in the base section and centrifugal fiberising apparatus, wherein the outlet in the base section leads to the centrifugal fiberising apparatus.

The method of this publication includes forming a flame in the bottom section of the combustion chamber. This is achieved by injecting a secondary fuel and a secondary combustion gas into the bottom section. Forming a flame in this section is advantageous as it is a mechanism by which the melt temperature can be controlled. Provision of secondary combustion gas can also contribute to complete combustion of the primary fuel, especially where that is a solid particulate fuel (e.g., coal) that undergoes combustion in two stages. In the first stage, which is known as pyrolysis, the volatile compounds burn very quickly with rapid evolution of gas. This generates char particles, which are rich in carbon. The second stage is combustion of the char particle which is much slower than the first stage. The second stage typically takes between 10 and 100 times longer than the first stage. Hence, while the first stage of combustion occurs almost instantaneously when a fuel particle enters a combustion chamber, the second stage does not normally occur unless the fuel has a significant residence time.

Typically, once the initial stage of combustion has taken place in the upper zone of the chamber, the char particle is thrown to the sides of the chamber and can become incorporated into the melt. In systems where the cyclone is preferably used to generate a mineral melt for subsequent formation into mineral fibres, the quality of the melt exiting the furnace is of critical importance. If the fuel is incompletely combusted, leaving some char in the melt, the melt quality will be poor and may include bubbles or other inhomogeneities.

In the system of WO2008/086991 the problem of reduced melt quality, caused by reduced chamber volumes and hence lower residence time, is solved by injecting secondary combustion gas into the lower zone of the combustion chamber. This allows the second stage of combustion of the fuel to take place much more rapidly than is usual in this zone where the oxygen levels are usually low.

The secondary fuel can be all a solid fuel such as coal but preferably also comprises liquid or gaseous fuel. It is disclosed that the secondary combustion gas and secondary fuel can be introduced together, via an oxy-fuel burner, this being especially useful for liquid or gaseous fuels.

Secondary gas inlets, e.g. for the case when excess oxygen is added, are also generally disclosed.

It is disclosed that the proportions of secondary fuel and secondary combustion gas may be either sub-stoichiometric (insufficient secondary combustion gas to allow complete combustion of the secondary fuel), stoichiometric (which is preferred) or super-stoichiometric (excess secondary combustion gas). The first of these options is said to have the effect of generating a more widespread flame whereas the last is said to have the effect of contributing to completion of combustion of primary fuel where desired.

In the bottom section of the circulating combustion chamber the mineral melt flows down the walls to be collected in the base section. In this region the melt is present as a thin film on the walls of the chamber and as a bath in the base section, which is normally shallow. Hence, applying radiant heat in this area is particularly effective as it can penetrate the whole of the melt easily. Therefore, using a flame in this region is particularly effective at heating the melt homogeneously. It can also heat the melt rapidly and precisely so that by varying the flow rate of secondary fuel and secondary combustion gas, the temperature of the melt can be maintained within precise limits.

However, despite the numerous advantages of this system, there remains room for improvement, in particular with respect to energy efficiency, and provision of a stable flame in the lower zone of the combustion chamber.

The present invention is concerned with increasing the energy efficiency and process stability of known methods for making mineral fibres using the melting cyclone furnace system.

### Summary of the Invention

The present invention provides a method of making a mineral melt, the method comprising
providing a circulating combustion chamber which comprises an upper zone, a lower zone and a base zone,
injecting primary particulate fuel and particulate mineral material and primary combustion gas into the upper zone of the circulating combustion chamber, thereby at least partially combusting the primary particulate fuel and thereby melting the particulate mineral material to form a mineral melt and generating exhaust gases,
injecting into the lower zone of the circulating combustion chamber, through at least one first burner, secondary combustion gas and gaseous fuel and secondary particulate fuel, wherein the secondary combustion gas and gaseous fuel and secondary particulate fuel are injected via a single first burner,
wherein the amount of secondary combustion gas injected via each first burner is insufficient for stoichiometric combustion of the total amount of gaseous fuel and secondary particulate fuel injected via that first burner, and
injecting tertiary combustion gas into the lower zone of the circulating combustion chamber, through at least one tertiary combustion gas injector, whereby the tertiary combustion gas enables completion of the combustion of the gaseous fuel and the secondary particulate fuel,
wherein there is provided a tertiary combustion gas injector for each first burner,
wherein each tertiary gas injector is positioned, relative to its associated first burner, downstream of a frame generated from the first burner, and so as to direct tertiary combustion gas into the flame in the burning direction of the flame,
whereby downstream defines a location in the direction of circulating movements in the combustion chamber,
separating the mineral melt from the hot exhaust gases so that the hot exhaust gases pass through an outlet in the circulating combustion chamber and the mineral melt collects in the base zone.

The disclosure also provides an apparatus for making a mineral melt, for the purpose of comparison, not according to the invention, comprising a circulating combustion chamber which comprises a cylindrical top section, a bottom section and a base section, wherein the circulating combustion chamber comprises
inlets in the top section for primary particulate fuel, particulate mineral material and primary combustion gas,
at least one dual oxy-fuel burner in the bottom section for injection of secondary particulate fuel, gaseous fuel and secondary combustion gas
at least one tertiary combustion gas injector in the bottom section for injection of tertiary combustion gas
an outlet for exhaust gases and
an outlet in the base section for allowing release of mineral melt.

The circulating combustion chamber in the present invention is of the type which is frequently referred to as a cyclone furnace. It has a top (upper) section, a bottom (lower) section and a base section. During use of the chamber, the chamber comprises an upper zone, a lower zone and a base zone. The upper zone is where pyrolysis, the initial stage of combustion of the primary particulate fuel, takes place. This corresponds broadly to the cylindrical top section of the chamber. The lower zone is the zone in which the combustion of char takes place. Hence, the lower zone generally corresponds to the frustoconical bottom section of the chamber, particularly the surfaces of the chamber in this section.

This method, and the associated apparatus suitable for carrying it out, each require a specific combination of features and have numerous advantages.

The provision of secondary combustion in the lower zone has the advantage that it is possible to control the temperature and quality of the melt formed. It also allows for the possibility of ensuring full combustion of the primary particulate fuel.

In the case, disclosed in WO2008/086991, and most straightforward in practice, where the secondary fuel is solely gaseous (for instance natural gas) then it is straightforward to supply this and the secondary combustion gas via a single oxy-fuel burner. The inclusion, in the invention, of secondary particulate fuel via the same burner as the secondary combustion gas and gaseous fuel (known as a dual oxy-fuel burner) provides a cost and energy efficiency saving, relative to using gaseous fuel as the sole fuel.

This in itself has been found to lead to the difficulty that if the amount of secondary combustion air supplied through that dual oxy-fuel burner is the stoichiometrically-required amount relative to the total fuel being supplied via that burner, then the flame generated is insufficiently stable.

We find that the deliberate choice of a sub-stoichiometric ratio of secondary combustion gas to total fuel being supplied via the dual oxy-fuel burner, in particular an amount of secondary combustion gas which is limited to that required for stoichiometric combustion of the gaseous fuel only, leads to the provision of a particularly stable flame.

The invention then requires, associated with each first burner, a tertiary combustion gas injector which supplies sufficient tertiary combustion gas to allow complete combustion of both the secondary particulate fuel and the gaseous fuel and preferably also the primary particulate fuel, which will in practice have undergone pyrolysis to form char in the upper zone of the combustion chamber. In practice the gaseous fuel supplied via the first burner will undergo combustion rapidly with the secondary combustion gas, and the secondary particulate fuel will be preheated, and may begin combustion, but will not undergo full combustion until it comes into contact with the tertiary combustion gas.

This surprisingly leads to energy efficiencies, in particular in comparison with a process in which the secondary particulate fuel is supplied separately from the gaseous fuel, via a separate burner or inlet.

Moreover, the process of the invention allows maintenance of energy usage and efficiency even when using lower-cost and easier-to-obtain fuels such as coal and coke (relative to processes using natural gas as the secondary fuel). Further, such processes have unexpectedly been found not to lead to increased CO emissions relative to processes using only natural gas as fuel. It is also possible to reduce the cooling water loss in a process of the invention, relative to equivalent processes in which natural gas is used as the fuel. Thus the invention allows the efficient and environmentally acceptable use of particulate fuels such as coke fines and powdered or crushed coal, which are often difficult to incorporate in melting processes with an appropriate level of energy efficiency.

### Detailed description of the invention

The circulating combustion chamber in the present invention is of the type which is frequently referred to as a cyclone furnace. It has a top (upper) section, a bottom (lower) section and a base section. The construction of suitable cyclone furnaces is described in various patents including US 3,855,951, 4,135,904, 4,553,997, 4,544,394, 4,957,527, 5,114,122 and 5,494,863, as well as WO2008/086991 discussed above.

The chamber is generally vertically rather than horizontally inclined. It normally has a cylindrical top section, a frustoconical bottom section and a base section but can be wholly cylindrical. The base section is preferably an integral part of the chamber and can be simply the end part of the frustoconical bottom section or can be a cylindrical section at the end of the bottom section.

The internal diameter of the base section is not larger than the internal diameter of the top section, in contrast to traditional systems which often employ a tank at the base of the chamber of enhanced volume.

An advantage of the invention, particularly in an embodiment wherein oxygen-enriched air or pure oxygen is used as the primary combustion gas, is that a compact combustion chamber can be used. Hence, it is preferred in the present invention that the combustion chamber is an integral chamber. By this, we mean that the chamber is not made up of different component parts which can be separated from one another. The ability to use compact furnaces compared to prior art systems minimises the surface area losses of energy from the furnace.

The chamber volume is preferably less than about 25m³. Often it is less than about 20m³ or 15m³, or even less than 10m³, depending on the capacity of the cyclone furnace.

During use of the chamber, the chamber comprises an upper zone, a lower zone and a base zone.

The upper zone is where pyrolysis, the initial stage of combustion of the primary particulate fuel, takes place. This corresponds broadly to the cylindrical top section of the chamber. The primary particulate fuel and preferably also the particulate mineral material and primary combustion gas are injected into the upper zone. The upper zone also includes an outlet through which hot gases pass.

Pyrolysis of the fuel in the upper zone creates char, a carbon-rich material. The char particles are generally thrown onto the surfaces of the chamber by the circulating gases and flow, with the melt, down the surfaces of the chamber under the action of gravity.

The lower zone is the zone in which the combustion of char takes place. Hence, the lower zone generally corresponds to the frustoconical bottom section of the chamber, particularly the surfaces of the chamber in this section. Char particles may also be present on the surface of the melt in the top section of the chamber, and floating on the horizontal surface of the melt pool in the base zone.

Hence the upper zone generally extends over the majority of the top section, of the chamber whereas the lower zone extends over the majority of the bottom section, particularly the surfaces of the bottom section of the chamber and may also extend to some extent on to the surfaces of the top section of the chamber.

Typically, in the lower region of a circulating combustion chamber of the type which has separation of gas at the top and melt at the bottom, oxygen levels are low, even if an excess of oxygen has been added in the upper region. Therefore, char in traditional systems needs a long residence time to burn in this region. In the present invention, the secondary and tertiary combustion gases that are injected into the lower zone will aid the second stage of combustion, i.e., combustion of char particles. Therefore, complete combustion of the fuel occurs in the lower zone in the method of the present invention.

The primary particulate fuel can be in liquid or solid form. Where the primary fuel is a liquid, it is used in the form of droplets, i.e., particles of liquid fuel. In this embodiment, the fuel can be particles of oil or other carbon based liquids.

However, the primary particulate fuel in the present invention is preferably solid. It is generally a carbonaceous material and can be any particulate carbonaceous material that has a suitable calorific value. This value can be relatively low, for instance as low as 10000kJ/kg or even as low as 5000kJ/kg. Thus it may be, for instance, dried sewage sludge or paper waste. Preferably it has higher calorific value and may be spent pot liner from the aluminium industry, coal containing waste such as coal tailings, or powdered coal.

In a preferred embodiment, the primary fuel is powdered coal and may be coal fines but preferably some, and usually at least 50% and preferably at least 80% and usually all of the coal is made by milling lump coal, for instance using a ball mill. The coal, whether it is supplied initially as fines or lump, may be good quality coal or may be waste coal containing a high inorganic content, for instance 5 to 50% inorganic with the balance being carbon. Preferably the coal is mainly or wholly good quality coal for instance bituminous or sub-bituminous coal (ASTM D388 1984) and contains volatiles which promote ignition.

The primary fuel particles preferably have a particle size in the range from 50 to 1000µm, preferably about 50 to 200µm. Generally at least 90% of the particles (by weight) are in this range. Generally the average is about 70µm average size, with the range being 90% below 100µm.

The primary particulate fuel can be fed into the chamber through a feed pipe in a conventional manner to give a stream of fuel particles. This normally involves the use of a carrier gas in which the fuel particles are suspended. The carrier gas can be air, oxygen-enriched air or pure oxygen, preferably at ambient temperature to avoid flashbacks, or a less reactive gas such as nitrogen. The feed pipe is preferably cylindrical.

Preferably the top section contains at least two, for instance two or four, inlets for primary particulate fuel, and at least two, for instance two or four, inlets for primary combustion gas.

Primary combustion gas is introduced into the top section of the chamber and can be at ambient temperature or can be preheated. When the gas is heated, the maximum desirable temperature to which the primary combustion gas is preheated is around 600°C, and the preferred preheating is to a temperature between 300 and 600 °C, most preferably to around 500 to 550°C. The primary combustion gas can be any gas in which the primary particulate fuel can combust, for example, air, air enriched with oxygen or pure oxygen. It can also include propane or methane.

In preferred embodiments the primary combustion gas contains at least 25% oxygen. It is preferably oxygen-enriched air which comprises at least 30%, preferably at least 50%. It may be at least 70% oxygen by volume or even pure oxygen. The oxygen-enriched air may comprise minor amounts of gases that are not typically present in air.

Where pure oxygen is used it is preferably at ambient temperature, rather than being preheated. In the embodiment where the primary combustion gas is oxygen-enriched air or pure oxygen, the total volume of primary combustion gas used can be much less than where air alone is used as the primary combustion gas, as only the oxygen is used for combustion. Hence, significant energy savings can be made through the use of oxygen-enriched air or pure oxygen, as the lower volume of combustion gas requires less energy to heat. Using oxygen-enriched air or pure oxygen also means that the circulating combustion chamber can be smaller than when air is used. This also leads to energy savings.

The primary combustion gas may be introduced through a feed pipe with the primary particulate fuel suspended in it, especially when the gas is at a relatively low temperature. The fuel should not begin to combust in the fuel pipe before it enters the chamber (a phenomenon known as "flash back"), so low gas temperatures are needed in this embodiment. However, the primary combustion gas is preferably introduced separately through one or more combustion gas inlets which can be located in the vicinity of the primary particulate fuel feed pipe so that the combustion gas is directed into the chamber in the same region as the fuel, to allow for efficient mixing. In the most preferred embodiment, the primary combustion gas inlet concentrically surrounds the primary particulate fuel feed pipe.

Whether or not they are introduced together, the speed at which the primary combustion gas and the primary particulate fuel are injected into the chamber is relatively low (preferably between 1 and 50 m/s), so as to minimise wear of the apparatus. When the primary particulate fuel is suspended in the primary combustion gas, the speed is preferably between 5 and 40 m/s. When they are introduced separately, which is preferred, the injection speed of the fuel is preferably 20 to 40 m/s.

It is desirable to ensure that the primary particulate fuel is mixed rapidly and thoroughly with the primary combustion gas as this ensures that the fuel is ignited rapidly so that it can undergo pyrolysis almost immediately after introduction into the chamber. Having thorough mixing also ensures that the residence time of the primary particulate fuel particles in the primary combustion gas is more uniform, thereby leading to more efficient fuel combustion.

To help ensure rapid and thorough mixing, in one embodiment of the invention an additional gas can be introduced in the upper zone which travels at a higher speed than the primary combustion gas and the primary particulate fuel and, due to the speed differential, causes turbulence of the stream of fuel particles thereby breaking up the stream and ensuring rapid mixing. Details of such a system are described in our earlier publication WO2008/019780.

The particulate mineral material is any material that is suitable for making mineral fibres, which can be glass fibres or rock stone or slag fibres. Glass fibres typically have a chemical analysis, by weight of oxides, of above 10% Na₂O + K₂O, below 3% iron as FeO, below 20% CaO + MgO, above 50% SiO₂ and below 5% Al₂O₃. Rock, stone or slag fibres typically have an analysis, by weight of oxides, of below 10% Na₂O + K₂O, above 20% CaO + MgO above 3% iron as FeO, and below 50% SiO₂ and, often, above 10% Al₂O₃. The mineral material can be waste materials such as mineral fibres which have already been used or which have been rejected before use from other processes.

The particulate mineral material, which is melted in the chamber to produce the mineral melt, is introduced into the upper section of the chamber so that it becomes suspended in the gases therein. The point at which the particulate mineral material is added is not critical and it can be mixed with the fuel and injected through the fuel feed pipe. It is, however, preferable to add the particulate mineral material into the burning primary particulate fuel. This can be achieved by adding the particulate mineral material into the chamber though an inlet in a conventional way, for example at or near to the top of the chamber.

The primary particulate fuel and the particulate mineral material and primary combustion gas are injected into the top section of the combustion chamber, which is usually cylindrical. The chamber has an outlet where hot exhaust gases can exit the chamber. This is preferably in the top section although it may be in the bottom section. In the top section the primary particulate fuel combusts in the combustion gas and causes the particulate mineral material to melt. The mineral melt is then thrown against the sides of the chamber by the action of the circulating currents and flows down the sides of the chamber, due to the force of gravity, and collects in the base section of the chamber. The base section has an outlet for the mineral melt through which the melt passes as a stream and is then subjected to fiberisation in any conventional manner, for instance using a cascade spinner or a spinning cup or any other conventional centrifugal fiberising process.

It is preferred that, at the point at which the outlet for mineral melt leaves the base section of the chamber, it does not immediately extend down but, instead, the outlet is a siphon. By a "siphon" we mean that the outlet, which is usually a tube or guttering, initially has an upward orientation relative to the opening in the chamber and subsequently has a downward orientation before leading to the fiberising equipment.

As is normal with a siphon, the result is that, in order for the melt to leave the chamber, the melt bath inside the chamber must be deep enough to reach the vertically highest point of the siphon outlet. When this happens, gravity causes the melt to pass up through the upwardly oriented part of the siphon and then flow down the subsequent part of the siphon to the fiberising equipment. Hence, this creates an air-lock in the system which ensures that exhaust gases cannot escape from the base of the chamber.

Using a siphon leads to improvements in the melt quality. This is due to the fact that char particles, which are fuel particles that have not combusted completely in the chamber, may collect on top of the melt pool and float there. These char particles are prevented from exiting the chamber with the melt by the siphon.

By enabling the char particles to collect on the melt, their residence time in the chamber is increased compared to when a siphon is not used. Hence, the char particles can complete their combustion in the base zone to achieve full burn-out of the fuel. This ensures that the energy efficiency of the process is optimised.

Burn-out in the base section of char particles floating on the melt is enhanced by the addition of secondary combustion gas into the bottom section of the circulating combustion chamber (see below).

The general motion of gases and suspended particulate material in the circulating combustion chamber is a cyclone motion. This is created by introduction of the primary combustion gas, as well as particulate fuel and mineral material, at an appropriate angle to sustain the swirling motion. The secondary and tertiary combustion gases and the fuel that are all injected in the lower zone are also preferably introduced with the same directional momentum so as to sustain the circulating currents.

In the lower zone of the circulating combustion chamber, which is normally frustoconical in shape, a secondary particulate fuel and fuel which is gaseous and a secondary combustion gas are injected, via at least one first burner. In the invention it is essential that there is at least one first burner through which secondary particulate fuel, gaseous fuel and secondary combustion gas are injected together. Such a first burner is colloquially known as a dual oxy-fuel burner.

The lower zone can comprise more than one such first burner, in particular preferred embodiments incorporate one or two first burners.

The fuel that is introduced via the at least one first burner in the lower zone comprises gaseous fuel and in particular can comprise any highly flammable gas. Preferably the gaseous fuel is selected from the group consisting of propane, methane and natural gas, most preferably natural gas.

The secondary particulate fuel can be, for example, selected from solid fuels such as coal or coke, or liquid fuels such as droplets of oil.

In a preferred embodiment, the secondary particulate fuel comprises up to 100% of a solid fuel. This can be any carbonaceous material that has a suitable calorific value as noted above with respect to the primary particulate fuel, but, as with the primary particulate fuel, is preferably coal.

This embodiment has economic advantages as coal is less expensive than gaseous fuels such as natural gas. Using a solid fuel such as coal has also been found to result in reduced NOx formation. This is likely to be due to the fact that coal creates reducing conditions in the lower zone of the chamber.

Alternatively the secondary particulate fuel can comprise coke fines, and/or any of the types of particulate fuel discussed above for use as the primary particulate fuel. Combinations of different types of secondary particulate fuel may be used.

An advantage of the invention is that, although the secondary particulate fuel may have the size characteristics discussed above for the primary particulate fuel, it does not have to have such a small particle size. For instance, rather than powdered solid fuel it is possible to use crushed or granulated solid particulate material. For instance, the solid secondary fuel may be formed of particles having size (diameter, determined by sieving) at least 50% above 100 microns, or at least 50% above 150 microns, preferably at least 80 % in the range 1 to 7 mm, more preferably at least 80 % in the range 3 to 5 mm. Provision of particles of this size rather than of the smaller sizes discussed above is more energy-efficient and costefficient.

In the most preferred embodiment, the fuel supplied through each first burner comprises at least 50%, preferably 70 to 90% solid particulate secondary fuel such as coal with the remainder of the fuel supplied via each first burner in the lower zone being gaseous fuel such as natural gas.

The secondary particulate fuel and gaseous fuel are, together, generally present in a lower amount than the primary particulate fuel and make up less than 40%, typically 15 to 30% of the total fuel energy.

The secondary combustion gas can be at ambient temperature or preheated and preferably comprises a higher level of oxygen than air, such as over 25% oxygen. It is usually oxygen-enriched air or pure oxygen. When the secondary combustion gas is oxygen-enriched air, it preferably comprises at least 30%, preferably at least 35%, more preferably at least 50% and most preferably at least 70% or even at least 90% oxygen by volume. Oxygen-enriched air also comprises other gases that are present in air, such as nitrogen, and can comprise gases that are not normally present in air, such as inert gases or flammable gases such as propane or butane, provided that the total oxygen content is more than in air (which is around 21% by volume).

In the most preferred embodiment the secondary combustion gas is pure oxygen. By "pure oxygen" we mean oxygen of 92% purity or more obtained by .e.g, the vacuum pressure swing absorption technique (VPSA) or it may be almost 100% pure oxygen obtained by a distillation method.

In another embodiment, to optimise energy savings associated with the increased cost of oxygen compared to air, the secondary combustion gas comprises 30 to 50% oxygen.

The secondary combustion gas and secondary particulate fuel are introduced into the lower zone, via a single first burner, to form a flame in the bottom section. The burner inlet is positioned in the lowest half of the bottom section of the circulating combustion chamber, preferably at the bottom of the lower zone, adjacent the base section so that the flame produced can heat the melt effectively. Preferably the flow rates of secondary combustion gas, gaseous fuel and secondary fuel are adjustable so the melt temperature can be changed as desired.

The secondary particulate fuel and gaseous fuel and secondary combustion gas are introduced in proportions such that there is insufficient oxygen in the secondary combustion gas to enable the secondary particulate fuel to undergo complete combustion. Preferably there will be sufficient combustion gas to enable the gaseous fuel to undergo complete combustion. In practice the gaseous fuel will ignite rapidly and combust to the extent possible given the amount of combustion gas, preferably completely. Preferably the amount of secondary combustion gas is in the range of 95 to 110 % of the amount necessary for stoichiometric combustion of the gaseous fuel, more preferably in the range 100 to 105 %.

However, the secondary particulate fuel ignites more slowly and then will be incompletely combusted due to the sub-stoichiometric amount of combustion air being injected through the relevant first burner. For example, there can be from 0 to 15 %, preferably less than 10%, more preferably less than 5 % of the amount of oxygen in the secondary combustion gas that would be required to enable the secondary particulate fuel to undergo complete combustion. This means that the flame has a tendency to be extended over a wide area.

Typically, the bottom section of the chamber has some oxygen in the atmosphere but the levels are low. Consequently, the flame spreads more widely across the bottom section than if the oxygen levels were higher. In this case a large flame is formed which can heat a larger area of the melt effectively.

We find that, if this approach is not taken, and a first burner is used which supplies sufficient combustion air for combustion of the secondary particulate fuel, there is a tendency for the flame to be insufficiently stable, in particular relative to the flame generated by an oxy-fuel burner which uses only gaseous fuel. This problem is alleviated by the use of sub-stoichiometric amounts of combustion air though the first burner and provision of the tertiary combustion gas injector associated with each first burner.

In the invention is it essential that there is provided in the lower zone a tertiary combustion gas injector which supplies sufficient tertiary combustion gas to allow complete combustion of the secondary particulate fuel.

In practice each first burner is generally associated with a tertiary combustion gas injector. The associated tertiary gas injector is positioned, relative to the first burner, downstream (in the direction of circulating movement in the combustion chamber) of the flame generated from the first burner, and so as to direct tertiary combustion gas into the flame in the burning direction of the flame.

When the primary particulate fuel used is one, such as coal, which combusts in two stages, it is advantageous to introduce the tertiary combustion gas in an amount such that there is more than sufficient total oxygen in the secondary and tertiary combustion gases to enable the secondary particulate fuel and the gaseous fuel to undergo complete combustion. The amount of oxygen is advantageously at least the amount that would be required to enable the secondary particulate fuel and gaseous fuel to combust completely, and preferably the amount that would enable the completion of combustion of char from the primary particulate fuel also Thus preferably the amount of oxygen in the tertiary combustion gas is in the range of 95 to 110 % of the amount necessary for stoichiometric combustion of the secondary particulate fuel, more preferably in the range 100 to 105 %. Where the amount of tertiary combustion gas provides less than 100% of the amount of oxygen necessary for stoichiometric combustion of the secondary particulate fuel, the remainder of the required oxygen is generally provided in the secondary combustion gas such that the secondary particulate fuel undergoes complete combustion.

The combustion chamber preferably comprises one or two first burner/tertiary combustion air injector pairs, the number of first burners being the same as the number of tertiary combustion air injectors.

The tertiary combustion gas injector may be a lance, in which case it injects only combustion gas, or a further burner, in which case it also injects additional fuel. A lance is preferred.

The tertiary combustion gas can be at ambient temperature or preheated and preferably comprises a higher level of oxygen than air, such as over 25% oxygen. It is usually oxygen-enriched air or pure oxygen. When the tertiary combustion gas is oxygen-enriched air, it preferably comprises at least 30%, preferably at least 35%, more preferably at least 50% and most preferably at least 70% or even at least 90% oxygen by volume. Oxygen-enriched air also comprises other gases that are present in air, such as nitrogen, and can comprise gases that are not normally present in air, such as inert gases or flammable gases such as propane or butane, provided that the total oxygen content is more than in air (which is around 21% by volume).

In the most preferred embodiment the tertiary combustion gas is pure oxygen. By "pure oxygen" we mean oxygen of 92% purity or more obtained by .e.g, the vacuum pressure swing absorption technique (VPSA) or it may be almost 100% pure oxygen obtained by a distillation method.

In addition to the first burner(s) it is possible to include one or more second burners through which gaseous fuel and further secondary combustion gas are injected. These second burners, if present, do not need to be associated with a tertiary combustion gas injector.

### Figures

Figure 1 is an illustration of a vertical cross-section of apparatus which is suitable for use in the present invention.
Figure 2 is a schematic top view cross-section of the bottom section (lower zone) of an apparatus which is suitable for use in the present invention.

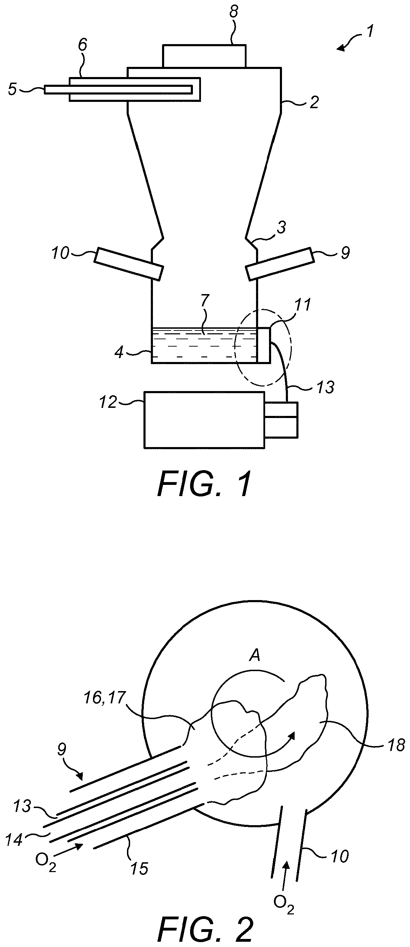

Figure 1 shows a circulating combustion chamber 1 which comprises a top section 2, a bottom section 3 and a base section 4. Primary particulate fuel and particulate mineral material are introduced through inlet 5, with primary combustion gas being introduced through inlet 6 which concentrically surrounds inlet 5. The primary particulate fuel is ignited and burns in the upper section 2 and is collected in the base section 4 as a melt pool 7. The hot exhaust gases pass through the flue gas outlet 8 at the top of the combustion chamber.

Secondary particulate fuel and gaseous fuel and secondary combustion gas are injected through dual oxy-fuel burners 9 and form a flame in the bottom region 3 which acts to heat the melt pool 7.

Tertiary combustion gas is introduced through combustion gas lances 10 in the bottom region 3, which aids stabilisation of the flame generated by each dual oxy-fuel burner, and also aids burn-out of the fuel in this region.

The melt flows through siphon 11 to fiberising equipment 12 where it is formed into fibres.

As shown in Figure 2, the gaseous fuel (e.g. natural gas) and secondary particulate fuel (e.g. particulate coal) are introduced via a dual oxy-fuel burner 9, the gaseous fuel being supplied through inlet 13 and the secondary particulate fuel being supplied through inlet 14. The combustion gas (e.g. oxygen) is supplied via the same dual oxy-fuel burner 9 through the inlet 15, and is sufficient for stoichiometric combustion of the gaseous fuel only.

The dual oxy-fuel burner generates a flame 16. This has a first combustion zone 17 in which the gaseous fuel combusts.

The associated tertiary combustion gas injector is a gas (e.g. oxygen) lance 10. The inlet for the tertiary combustion gas is downstream of the inlets of the dual oxy-fuel burner 9, in the direction A of circulating movement within the chamber. This allows the combustion of the secondary particulate fuel in a second combustion zone 18. It also allows completion of the combustion of the primary particulate fuel.

## Claims

1. A method of making a mineral melt, the method comprising
providing a combustion chamber, in which suspended particulate materials and gas circulate in a system which is or approaches a cyclone circulation system, the combustion chamber comprising an upper zone, a lower zone and a base zone,
injecting primary particulate fuel and particulate mineral material and primary combustion gas into the upper zone of the combustion chamber, thereby at least partially combusting the primary particulate fuel and thereby melting the particulate mineral material to form a mineral melt and generating exhaust gases,
injecting into the lower zone of the combustion chamber, through at least one first burner, secondary combustion gas and gaseous fuel and secondary particulate fuel, wherein the secondary combustion gas and gaseous fuel and secondary particulate fuel are injected via a single first burner,
wherein the amount of secondary combustion gas injected via each first burner is insufficient for stoichiometric combustion of the total amount of gaseous fuel and secondary particulate fuel injected via that first burner, and
injecting tertiary combustion gas into the lower zone of the combustion chamber, through at least one tertiary combustion gas injector, whereby the tertiary combustion gas enables completion of the combustion of the gaseous fuel and the secondary particulate fuel,
wherein there is provided a tertiary combustion gas injector for each first burner,
wherein each tertiary gas injector is positioned, relative to its associated first burner, downstream of a flame generated from the first burner, and so as to direct tertiary combustion gas into the flame in the burning direction of the flame,
whereby downstream defines a location in the direction of circulating movements in the combustion chamber,
separating the mineral melt from the hot exhaust gases so that the hot exhaust gases pass through an outlet in the combustion chamber and the mineral melt collects in the base zone.

2. A method according to claim 1, additionally comprising the step of making mineral fibres from the mineral melt by flowing the collected mineral melt through an outlet in the base zone to centrifugal fiberising apparatus and forming fibres.

3. A method according to claim 1 or 2 wherein the secondary and/or tertiary combustion gas is oxygen-enriched air which contains at least 30%, preferably at least 35%, more preferably at least 50% oxygen by volume.

4. A method according to any preceding claim wherein the secondary and /or tertiary combustion gas is oxygen-enriched air which contains at least 70% oxygen by volume.

5. A method according to any preceding claim wherein the secondary and/or tertiary combustion gas is pure oxygen.

6. A method according to any preceding claim wherein the tertiary combustion gas injector is a burner or a lance.

7. A method according to any preceding claim wherein the secondary particulate fuel is solid.

8. A method according to any preceding claim wherein the secondary particulate fuel is powdered coal.

9. A method according to any of claims 1 to 7 wherein the secondary particulate fuel is coke fines.

10. A method according to any preceding claim wherein at least 50% by weight of the particulate fuel particles are of size at least 100 microns.

11. A method according to any preceding claim wherein the amount of secondary combustion gas injected via each first burner is in the range of 95 to 110% of the amount sufficient for stoichiometric combustion of the gaseous fuel injected through that first burner.

12. A method according to claim 11 wherein the amount of secondary combustion gas injected via each first burner is in the range of 100 to 105% of the amount sufficient for stoichiometric combustion of the gaseous fuel injected through that first burner.

13. A method according to any preceding claim wherein the amount of tertiary combustion gas injected via each tertiary combustion gas injector is at least 95 % of the amount sufficient for stoichiometric combustion of the secondary particulate fuel injected through an associated first burner.

14. A method according to claim 13 wherein the amount of tertiary combustion gas injected via each tertiary combustion gas injector is in the range of 100 to 105% of the amount sufficient for stoichiometric combustion of the secondary particulate fuel injected through an associated first burner.

15. A method according to claim 13 wherein the total amount of primary and tertiary combustion gas is in the range of 100 to 105% of the amount sufficient for stoichiometric combustion of the first particulate fuel, the gaseous fuel and the secondary particulate fuel.

## Patentansprüche

1. Verfahren zum Herstellen einer Mineralschmelze, wobei das Verfahren Folgendes umfasst:
Bereitstellen einer Brennkammer, in der suspendierte partikelförmige Materialien und Gas in einem System zirkulieren, das ein Zyklonzirkulationssystem ist oder einem solchen ähnlich ist, wobei die Brennkammer eine obere Zone, eine untere Zone und eine Basiszone umfasst,
Einspritzen eines primären partikelförmigen Brennstoffs und partikelförmigen Mineralmaterials und eines primären Brenngases in die obere Zone der Brennkammer, wodurch mindestens teilweise der primäre partikelförmige Brennstoff verbrannt wird und wodurch das partikelförmige Mineralmaterial geschmolzen wird, um eine Mineralschmelze zu bilden, und Abgase erzeugt werden,
Einspritzen in die untere Zone der Brennkammer, durch mindestens einen ersten Brenner, eines sekundären Brenngases und gasförmigen Brennstoffs und eines sekundären partikelförmigen Brennstoffs, wobei das sekundäre Brenngas und der gasförmige Brennstoff und der sekundäre partikelförmige Brennstoff über einen einzelnen ersten Brenner eingespritzt werden,
wobei die Menge des über jeden ersten Brenner eingespritzten sekundären Brenngases für eine stöchiometrische Verbrennung der Gesamtmenge des über diesen ersten Brenner eingespritzten gasförmigen Brennstoffs und sekundären partikelförmigen Brennstoffs unzureichend ist, und
Einspritzen eines tertiären Brenngases in die untere Zone der Brennkammer, durch mindestens einen tertiären Brenngaseinspritzer, wobei das tertiäre Brenngas einen Abschluss der Verbrennung des gasförmigen Brennstoffs und des sekundären partikelförmigen Brennstoffs ermöglicht,
wobei ein Einspritzer für tertiäres Brenngas für jeden ersten Brenner bereitgestellt ist, wobei jeder Einspritzer für tertiäres Gas, relativ zu seinem assoziierten ersten Brenner, stromabwärts von einer Flamme positioniert ist, die von dem ersten Brenner erzeugt wird, und so, dass tertiäres Brenngas in die Flamme in der Brennrichtung der Flamme gerichtet wird,
wobei stromabwärts eine Stelle in der Richtung von zirkulierenden Bewegungen in der Brennkammer definiert,
Trennen der Mineralschmelze von den heißen Abgasen, sodass die heißen Abgase durch einen Auslass in die Brennkammer gehen und sich die Mineralschmelze in der Basiszone ansammelt.

2. Verfahren gemäß Anspruch 1, das zusätzlich den Schritt des Herstellens von Mineralfasern aus der Mineralschmelze durch Fließenlassen der angesammelten Mineralschmelze durch einen Auslass in der Basiszone zu einer zentrifugalen Faserherstellungsvorrichtung und Bilden von Fasern umfasst.

3. Verfahren gemäß Anspruch 1 oder 2, wobei das sekundäre und/oder tertiäre Brenngas sauerstoffangereicherte Luft ist, die mindestens 30 %, bevorzugt mindestens 35 %, bevorzugter mindestens 50 % Sauerstoff pro Volumen enthält.

4. Verfahren gemäß einem vorhergehenden Anspruch, wobei das sekundäre und/oder tertiäre Brenngas sauerstoffangereicherte Luft ist, die mindestens 70 % Sauerstoff pro Volumen enthält.

5. Verfahren gemäß einem vorhergehenden Anspruch, wobei das sekundäre und/oder tertiäre Brenngas reiner Sauerstoff ist.

6. Verfahren gemäß einem vorhergehenden Anspruch, wobei der Einspritzer für tertiäres Brenngas ein Brenner oder eine Lanze ist.

7. Verfahren gemäß einem vorhergehenden Anspruch, wobei der sekundäre partikelförmige Brennstoff fest ist.

8. Verfahren gemäß einem vorhergehenden Anspruch, wobei der sekundäre partikelförmige Brennstoff pulverisierte Kohle ist.

9. Verfahren gemäß einem der Ansprüche 1 bis 7, wobei der sekundäre partikelförmige Brennstoff Feinkoks ist.

10. Verfahren gemäß einem vorhergehenden Anspruch, wobei mindestens 50 % pro Gewicht der partikelförmigen Brennstoffpartikel von einer Größe von mindestens 100 Mikrometer sind.

11. Verfahren gemäß einem vorhergehenden Anspruch, wobei die Menge des über jeden ersten Brenner eingespritzten sekundären Brenngases in dem Bereich von 95 bis 110 % der Menge liegt, die für eine stöchiometrische Verbrennung des durch diesen ersten Brenner eingespritzten gasförmigen Brennstoffs ausreichend ist.

12. Verfahren gemäß Anspruch 11, wobei die Menge des über jeden ersten Brenner eingespritzten sekundären Brenngases in dem Bereich von 100 bis 105 % der Menge liegt, die für eine stöchiometrische Verbrennung des durch diesen ersten Brenner eingespritzten gasförmigen Brennstoffs ausreichend ist.

13. Verfahren gemäß einem vorhergehenden Anspruch, wobei die Menge des über jeden Einspritzer für tertiäres Brenngas eingespritzten tertiären Brenngases mindestens 95 % der Menge ist, die für eine stöchiometrische Verbrennung des durch einen assoziierten ersten Brenner eingespritzten sekundären partikelförmigen Brennstoffs ausreichend ist.

14. Verfahren gemäß Anspruch 13, wobei die Menge des über jeden Einspritzer für tertiäres Brenngas eingespritzten tertiären Brenngases in dem Bereich von 100 bis 105 % der Menge liegt, die für eine stöchiometrische Verbrennung des durch einen assoziierten ersten Brenner eingespritzten sekundären partikelförmigen Brennstoffs ausreichend ist.

15. Verfahren gemäß Anspruch 13, wobei die Gesamtmenge des primären und tertiären Brenngases in dem Bereich von 100 bis 105 % der Menge liegt, die für eine stöchiometrische Verbrennung des ersten partikelförmigen Brennstoffs, des gasförmigen Brennstoffs und des zweiten partikelförmigen Brennstoffs ausreichend ist.

## Revendications

1. Méthode de réalisation d'une masse fondue minérale, la méthode comprenant
la mise en place d'une chambre de combustion, dans laquelle circulent des matières particulaires en suspension et du gaz dans un système, qui est un système à circulation cyclonique, ou proche de celui-ci, la chambre de combustion comprenant une zone supérieure, une zone inférieure et une zone de base,
l'injection de combustible particulaire primaire, et de matières minérales particulaires et de gaz de combustion primaire dans la zone supérieure de la chambre de combustion, en procédant ainsi à la combustion au moins partielle du combustible particulaire primaire et à la fusion des matières minérales particulaires pour former une masse fondue minérale et générer des gaz d'évacuation,
l'injection dans la zone inférieure de la chambre de combustion, à travers au moins un premier brûleur, d'un gaz de combustion secondaire, d'un combustible gazeux, et d'un combustible particulaire secondaire, le gaz de combustion secondaire, le combustible gazeux, et le combustible particulaire secondaire étant injectés via un première brûleur individuel,
la quantité de gaz de combustion secondaire injectée via chaque premier brûleur étant insuffisante pour une combustion stœchiométrique de la quantité totale de combustible gazeux et de combustible particulaire secondaire injectée via ce première brûleur, et
l'injection d'un gaz de combustion tertiaire dans la zone inférieure de la chambre de combustion, à travers au moins un injecteur de gaz de combustion tertiaire, le gaz de combustion tertiaire permettant l'achèvement de la combustion du combustible gazeux et du combustible particulaire secondaire,
un injecteur de gaz de combustion tertiaire étant pourvu pour chaque premier brûleur, chaque injecteur de gaz de combustion tertiaire étant positionné, relativement à son premier brûleur connexe, en aval d'une flamme générée par le premier brûleur, et de façon à diriger du gaz de combustion tertiaire dans la flamme dans la direction de combustion de la flamme,
en aval définissant un emplacement dans la direction de mouvements de circulation dans la chambre de combustion,
la séparation de la masse fondue minérale des gaz d'échappement chauds de sorte que les gaz d'échappement chauds passant à travers une sortie dans la chambre de combustion et la masse fondue minérale se recueillent dans la zone de base.

2. Méthode selon la revendication 1, comprenant en outre l'étape de production de fibres minérales avec la masse fondue minérale, par l'écoulement de la masse fondue minérale recueillie, par une sortie dans la zone de base, vers un appareil de défibrage centrifuge, et de formation de fibres.

3. Méthode selon la revendication 1 ou 2, le gaz de combustion secondaire et/ou tertiaire étant de l'air enrichi en oxygène contenant au moins 30%, de préférence au moins 35%, mieux encore au moins 50% d'oxygène par volume.

4. Méthode selon une quelconque des revendications précédentes, le gaz de combustion secondaire et/ou tertiaire étant de l'air enrichi en oxygène contenant au moins 70% d'oxygène par volume.

5. Méthode selon une quelconque des revendications précédentes, le gaz de combustion secondaire et/ou tertiaire étant de l'oxygène pur.

6. Méthode selon une quelconque des revendications précédentes, l'injecteur du gaz de combustion tertiaire étant un brûleur ou une lance.

7. Méthode selon une quelconque des revendications précédentes, le combustible particulaire secondaire étant solide.

8. Méthode selon une quelconque des revendications précédentes, le combustible particulaire secondaire étant du charbon pulvérisé.

9. Méthode selon une quelconque des revendications 1 à 7, le combustible particulaire secondaire étant des fines de coke.

10. Méthode selon une quelconque des revendications précédentes, au moins 50% en poids des particules de combustible particulaire mesurant au moins 100 microns.

11. Méthode selon une quelconque des revendications précédentes, la quantité de gaz de combustion secondaire injectée par le biais de chaque premier brûleur se trouvant dans la plage comprise entre 95 et 110% de la quantité suffisante pour la combustion stœchiométrique du carburant gazeux injecté à travers ce premier brûleur.

12. Méthode selon la revendication 11, la quantité de gaz de combustion secondaire injectée via chaque premier brûleur se trouvant dans la plage comprise entre 100 et 105% de la quantité suffisante pour la combustion stœchiométrique du carburant gazeux injecté à travers ce premier brûleur.

13. Méthode selon une quelconque des revendications précédentes, la quantité de gaz de combustion tertiaire injectée par le biais de chaque injecteur de gaz de combustion tertiaire étant au moins 95% de la quantité suffisante pour la combustion stœchiométrique du combustible particulaire secondaire injecté à travers un premier brûleur connexe.

14. Méthode selon la revendication 13, la quantité de gaz de combustion tertiaire injectée par le biais de chaque injecteur de gaz de combustion tertiaire étant comprise dans la plage allant de 100 à 105% de la quantité suffisante pour la combustion stœchiométrique du combustible particulaire secondaire injecté à travers un premier brûleur connexe.

15. Méthode selon la revendication 13, la quantité totale de gaz de combustion primaire et tertiaire étant comprise dans la plage allant de 100 à 105% de la quantité suffisante pour la combustion stœchiométrique du premier combustible particulaire, du combustible gazeux, et du combustible particulaire secondaire.
